# EUROPÄISCHE PATENTSCHRIFT

(11) **EP 1 976 314 B1**
(45) Veröffentlichungstag und Bekanntmachung des Hinweises auf die Patenterteilung: **12.12.2018**
(21) Anmeldenummer: 08005772.2
(22) Anmeldetag: 27.03.2008
(51) Int. Cl.: H04W 12/12, H04W 8/18, H04W 12/06

(54) **Zuordnen eines mobilen Endgeräts und einer Teilnehmerkarte und Überprüfen der Zulässigkeit der Nutzung eines mobilen Endgeräts mit einer Teilnehmerkarte**
Allocation of a mobile terminal and a subscriber card and testing the possibility of using a mobile terminal with a subscriber card
Attribution d'un terminal mobile et d'une carte d'abonné et contrôles de l'autorisation d'utiliser un terminal mobile à l'aide d'une carte d'abonné

(30) Priorität: 28.03.2007 DE 102007015016
(43) Veröffentlichungstag der Anmeldung: 01.10.2008
(73) Patentinhaber: Giesecke+Devrient Mobile Security GmbH, 81677 München (DE)
(72) Erfinder: Donle, Thomas, 85777 Fahrenzhausen (DE)

(56) Entgegenhaltungen:
- EP-A1- 0 602 319
- EP-A1- 1 001 640

## Beschreibung

Die Erfindung betrifft ein Verfahren zum gegenseitigen Zuordnen eines mobilen Endgeräts und einer Teilnehmerkarte zum Betrieb des mobilen Endgeräts, wobei das Endgerät und die Teilnehmerkarte derart einander zugeordnet werden, dass das Endgerät mit keiner anderen Teilnehmerkarte als der Teilnehmerkarte gemäß der Zuordnung nutzbar ist (SIM-Lock), sowie ein Verfahren zum Überprüfen der Zulässigkeit der Nutzung eines mobilen Endgeräts mit einer Teilnehmerkarte.

Unter einem mobilen Endgerät wird ein Gerät zum Nutzen eines Mobilfunksystems in Verbindung mit einer Teilnehmerkarte verstanden, z.B. ein Mobiltelefon, Smart Phone oder PDA (Personal Digital Assistant) mit Mobiltelefonfunktion. Herzstück der Teilnehmerkarte ist das Sicherheitsmodul, das Identitätsdaten enthält, wie beispielsweise die IMSI und den Authentisierungsschlüssel Ki, die für die Teilnehmerkarte und damit indirekt für den Nutzer der Teilnehmerkarte bzw. des damit betriebenen mobilen Endgeräts spezifisch sind.

Beispiele für Mobilfunksysteme sind GSM (Global System for Mobile Communications), UMTS (Universal Mobile Telecommunications System), IMT-2000 (International Mobile Communication 2000). Im GSM-Mobilfunksystem ist das Sicherheitsmodul als SIM (SIM = Subscriber Identity Module) bezeichnet, im UMTS-Mobilfunksystem als USIM (USIM = Universal SIM). Die Teilnehmerkarte wird in diesen Fällen häufig als SIM-Karte bzw. USIM-Karte bezeichnet.

Verbreitet werden mobile Endgeräte zu vom Endgerätehersteller stark subventionierten Endgerätepreisen an Endkunden abgegeben. Im Gegenzug für den subventionierten Endgerätepreis soll der Endkunde das Endgerät nur mit der mitgelieferten Teilnehmerkarte und den durch die Teilnehmerkarte festgelegten häufig relativ hohen Verbindungskosten und/ oder Gebühren nutzen. Um die hierzu erforderliche gegenseitige Zuordnung oder Bindung des Endgeräts und der Teilnehmerkarte zu erreichen, wird ein Verfahren des sogenannten SIM-Lock oder der SIM-Sperre eingesetzt. Beim SIM-Lock liest entweder das Endgerät vorbestimmte Daten aus der Teilnehmerkarte aus und vergleicht sie mit entsprechenden im Endgerät abgespeicherten Daten, oder die Teilnehmerkarte liest, z.B. mittels einer SIM Application Toolkit Applikation, Daten aus dem Endgerät aus und vergleicht sie mit entsprechenden in der Teilnehmerkarte abgespeicherten Daten. Nur wenn die Daten aus Teilnehmerkarte und Endgerät übereinstimmen, kann das Endgerät mit der Teilnehmerkarte betrieben werden. Als Daten können beispielsweise sogenannte Group Identifier verwendet werden, mit denen sich Klassen von Teilnehmerkarten festlegen lassen, so dass das Endgerät nur mit Teilnehmerkarten genutzt werden kann, die der festgelegten Klassen angehören. Das grundlegende Verfahren des SIM-Lock ist für das GSM-System beispielsweise ein *Rankl*/*Effing, Handbuch der Chipkarten, 4. Auflage, Kap. 13.2 "Das GSM-System", S. 791, Abschnitt "Funktionsweise des SIM-Lock"* beschrieben.

Das herkömmliche SIM-Lock erfordert, dass vor Herausgabe des Endgeräts und der Teilnehmerkarte an Händler oder Endkunden Daten, z.B. Group Identifier, in Endgerät und Teilnehmerkarte programmiert werden müssen, durch die das SIM-Lock verwirklicht wird. Ein geschickter Bastler kann die Daten manipulieren, beispielsweise in eine andere Teilnehmerkarte kopieren, und dadurch das SIM-Lock umgehen.

Das Dokument EP 0 602 319 A1 aus dem Stand der Technik offenbart, gemäß dem Oberbegriff von Anspruch 1, ein Verfahren zum gegenseitigen Zuordnen eines mobilen Endgeräts und einer Teilnehmerkarte. Um das Zuordnen zu erreichen, wird ein Initialisierungsprozess durchgeführt, bei dem das Endgerät an die Teilnehmerkarte eine Zufallszahl sendet, die Teilnehmerkarte mit der Zufallszahl und ihrem internen Kartenschlüssel einen Authentifikationsparameter berechnet und an das Endgerät sendet, und die Zufallszahl und der Authentifikationsparameter im Endgerät nichtflüchtig abgespeichert werden. Beim späteren Prüfen der Zuordnung zwischen Endgerät und Teilnehmerkarte sendet das Endgerät die gespeicherten Zufallszahl an die Teilnehmerkarte, die Teilnehmerkarte berechnet den Authentisierungsparameter mit ihrem internen Kartenschlüssel neu und sendet den neu berechneten Authentisierungsparameter zur Verifizierung an das Endgerät.

Das Dokument EP 1 001 640 A1 aus dem Stand der Technik offenbart ein Verfahren zum Setzen und wieder Aufheben eines Sperrzustands eines Endgeräts mittels durch einen Nutzer eingebbarer Sperr- und Entsperr-Kommandos, wobei durch das Endgerät die Identität der Teilnehmerkarte überprüft wird. Für die Identitätsprüfung der Teilnehmerkarte erzeugt das Endgerät eine Zufallszahl und sendet sie an die Teilnehmerkarte. Diese berechnet aus der Zufallszahl und einem privaten Schlüssel eine Antwort. Das Endgerät verifiziert die Antwort mit dem passenden öffentlichen Schlüssel. Der Erfindung liegt die Aufgabe zu Grunde, ein Verfahren zum gegenseitigen Zuordnen eines mobilen Endgeräts und einer Teilnehmerkarte zum Betrieb des mobilen Endgeräts (SIM-Lock) zu schaffen, das ein Umgehen der Zuordnung erschwert oder möglichst verhindert. Ein Verfahren zum Überprüfen der Zulässigkeit der Nutzung eines mobilen Endgeräts mit einer Teilnehmerkarte soll ebenfalls angegeben werden.

Die Aufgabe wird gelöst durch ein Verfahren nach Anspruch 1. Vorteilhafte Ausgestaltungen der Erfindung sind in den abhängigen Ansprüchen angegeben. Das erfindungsgemäße Verfahren ist zum gegenseitigen Zuordnen eines mobilen Endgeräts und einer Teilnehmerkarte zum Betrieb des mobilen Endgeräts eingerichtet. Das Endgerät und die Teilnehmerkarte werden dabei derart einander zugeordnet, dass das Endgerät - zumindest teilweise - mit keiner anderen Teilnehmerkarte als der Teilnehmerkarte gemäß der Zuordnung nutzbar ist. Die mögliche Nutzung des Endgeräts, die nur noch mit der zugeordneten Teilnehmerkarte möglich ist, umfasst wahlweise die gesamte Nutzung des Endgeräts. Alternativ umfasst diese mögliche Nutzung nur die Nutzung des Mobiltelefonnetzes, d.h. z.B. das Telefonieren, Versenden und Empfangen von SMS und dergleichen, wohingegen z.B. eine Nutzung des Telefonbuchs des mobilen Endgeräts auch ohne die zugeordnete Teilnehmerkarte möglich ist. Das Verfahren zeichnet sich dadurch aus, dass anlässlich des Zuordnens zwischen dem Endgerät und der Teilnehmerkarte: in der Teilnehmerkarte ein Einmalpasswortgenerator gestartet und mit dem Endgerät synchronisiert wird, der anlässlich einer - vorzugsweise jeder - nachfolgenden Inbetriebnahme des mobilen Endgeräts mit der Teilnehmerkarte ein Einmalpasswort erzeugt und an das mobile Endgerät sendet, um die Zulässigkeit der Nutzung des mobilen Endgeräts mit der Teilnehmerkarte zu überprüfen.

Dadurch, dass anlässlich des Zuordnens zwischen dem mobilen Endgerät und der Teilnehmerkarte der Einmalpasswortgenerator gestartet wird, finden nachfolgend, anlässlich einer Nutzung des mobilen Endgeräts mit einer Teilnehmerkarte, Überprüfungen der Zulässigkeit (Authentisierungen) der verwendeten Teilnehmerkarte nicht mehr mit fest abgespeicherten Daten statt, sondern mit variablen Einmalpasswörtern. Daher ist es unmöglich, die Zuordnung zwischen dem mobilen Endgerät und der Teilnehmerkarte, d.h. das SIM-Lock, durch z.B. Kopieren der Daten in eine andere Teilnehmerkarte zu umgehen.

Folglich ist gemäß Anspruch 1 ein SIM-Lock-Verfahren geschaffen, das ein Umgehen der Zuordnung erschwert oder möglichst verhindert.

Als Einmalpasswortgenerator ist wahlweise ein zeitgesteuerter oder eventgesteuerter Einmalpasswortgenerator vorgesehen.

Der zeitgesteuerte Einmalpasswortgenerator liefert in vorab festgelegten Zeitabständen, die typischerweise z.B. ein bis 15 Minuten betragen, jeweils ein neues Einmalpasswort, unabhängig davon, ob gerade ein Einmalpasswort benötigt wird oder nicht. Bei Inbetriebnahme des mobilen Endgeräts mit der Teilnehmerkarte sendet die Teilnehmerkarte das gerade aktuelle Einmalpasswort an das mobile Endgerät, um sich gegenüber dem mobilen Endgerät zu authentisieren.

Der eventgesteuerte Einmalpasswortgenerator liefert nur dann ein jeweils neues Einmalpasswort, wenn für eine Authentisierung der Teilnehmerkarte gegenüber dem mobilen Endgerät ein Einmalpasswort benötigt wird. Wahlweise wird der Einmalpasswortgenerator, wenn er erzeugt wird, mit dem mobilen Endgerät synchronisiert.

Wahlweise wird bedarfsweise, anlässlich des Erzeugens des Einmalpasswortgenerators in der Teilnehmerkarte, im mobilen Endgerät ebenfalls ein Einmalpasswortgenerator erzeugt. Wahlweise wird der im mobilen Endgerät erzeugte Einmalpasswortgenerator mit dem in der Teilnehmerkarte erzeugten Einmalpasswortgenerator synchronisiert.

Gemäß einer Ausführungsform der Erfindung wird, anlässlich des Zuordnens zwischen dem mobilen Endgerät und der Teilnehmerkarte, weiter mit einer in der Teilnehmerkarte eingerichteten Schlüssel-ErzeugungsEinrichtung ein Schlüssel erzeugt und an das mobile Endgerät geliefert; das mobile Endgerät nimmt anschließend in Reaktion auf den Schlüssel die Zuordnung zwischen dem mobilen Endgerät und der Teilnehmerkarte vor. Diese Ausführungsform der Erfindung hat den Vorteil, dass das Erzeugen der Zuordnung zwischen dem mobilen Endgerät und der Teilnehmerkarte ohne Beteiligung weiterer Komponenten (z.B. Server, Computer etc.) als des mobilen Endgeräts und der Teilnehmerkarte durchgeführt werden kann.

Der Schlüssel ist wahlweise durch in der Teilnehmerkarte abgespeicherte Daten gebildet oder durch eine verschlüsselte Form solcher Daten.

Gemäß einer Variante der vorstehenden Ausführungsform wird der von der Teilnehmerkarte gelieferte Schlüssel durch das Endgerät auf Zulässigkeit geprüft, und das mobile Endgerät nimmt die Zuordnung zwischen dem mobilen Endgerät und der Teilnehmerkarte in Reaktion auf den Schlüssel nur dann vor, falls der Schlüssel zulässig ist. Die Variante hat den Vorteil, dass sie eine Vor-Zuordnung z.B. zwischen gewissen Typen oder Klassen von Teilnehmerkarten und gewissen Typen oder Klassen von Endgeräten ermöglicht, allerdings erfordert die Variante den Aufwand für das Durchführen der Vor-Zuordnung.

Gemäß einer weiteren Ausführungsform der Erfindung wird das Zuordnen zwischen dem Endgerät und der Teilnehmerkarte anlässlich einer erstmaligen Inbetriebnahme des mobilen Endgeräts mit der Teilnehmerkarte durchgeführt. Diese Ausführungsform hat den Vorteil, dass der Aufwand zum Einrichten des SIM-Lock vor der Auslieferung des Endgeräts und der Teilnehmerkarte an z.B. einen Händler oder Endkunden besonders gering ist.

Beim erfindungsgemäßen Verfahren zum Überprüfen der Zulässigkeit der Nutzung eines mobilen Endgeräts mit einer Teilnehmerkarte werden oder wurden vorab das mobile Endgerät und die Teilnehmerkarte mit einem Verfahren wie vorstehend beschrieben gegenseitig zugeordnet. Die Zuordnung wurde vorzugsweise bereits vorab durchgeführt, beispielsweise noch beim Hersteller oder Herausgeber der Teilnehmerkarte oder/ und des mobilen Endgeräts, oder anlässlich einer erstmaligen Inbetriebnahme des mobilen Endgeräts mit der Teilnehmerkarte. Zum Überprüfen der Zulässigkeit der Nutzung des mobilen Endgeräts mit der Teilnehmerkarte wird, anlässlich einer Inbetriebnahme des mobilen Endgeräts mit der Teilnehmerkarte: mit dem Einmalpasswortgenerator der Teilnehmerkarte ein Einmalpasswort erzeugt und an das mobile Endgerät gesendet; beim mobilen Endgerät das Einmalpasswort auf Gültigkeit überprüft; und im Fall, dass das Einmalpasswort gemäß der Überprüfung beim mobilen Endgerät gültig ist, die Nutzung des mobilen Endgeräts mit der Teilnehmerkarte als zulässig eingestuft. Wahlweise wird im Fall, dass die Nutzung des mobilen Endgeräts mit der Teilnehmerkarte als zulässig eingestuft wird, das mobile Endgerät für die Nutzung mit der Teilnehmerkarte freigeschaltet.

Im Folgenden wird die Erfindung an Hand von Ausführungsbeispielen und unter Bezugnahme auf die Zeichnung näher erläutert, in der zeigen:
- Fig. 1: eine schematische Veranschaulichung eines herkömmlichen Verfahrens zum Überprüfen der Zulässigkeit der Nutzung eines mobilen Endgeräts mit einer Teilnehmerkarte;
- Fig. 2: eine schematische Veranschaulichung eines Verfahrens a) zum gegenseitigen Zuordnen eines mobilen Endgeräts und einer Teilnehmerkarte und b) zum Überprüfen der Zulässigkeit der Nutzung eines mobilen Endgeräts mit einer Teilnehmerkarte, gemäß einer Ausführungsform der Erfindung.

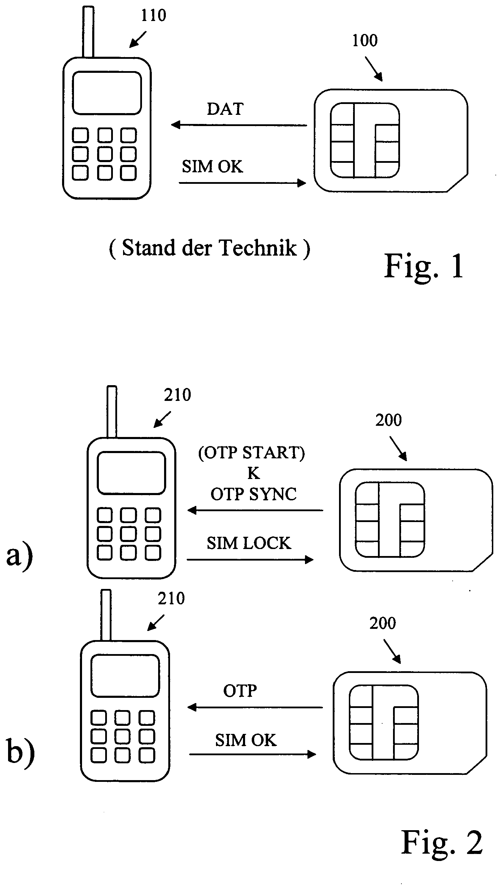

Fig. 1 zeigt eine schematische Veranschaulichung eines herkömmlichen Verfahrens zum Überprüfen der Zulässigkeit der Nutzung eines mobilen Endgeräts 110 mit einer Teilnehmerkarte 100. Bei einer Inbetriebnahme des mobilen Endgeräts 110 mit der Teilnehmerkarte 100 ist das mobile Endgerät 110 zunächst für die Nutzung gesperrt, d.h. nicht nutzbar. In der Teilnehmerkarte 100 abgespeicherte Daten DAT werden an das mobile Endgerät 110 übertragen und im mobilen Endgerät 110 auf ihre Gültigkeit überprüft. Falls das mobile Endgerät 110 die Daten DAT als gültig einstuft, hat sich die Teilnehmerkarte 100 gegenüber dem mobilen Endgerät 110 erfolgreich authentisiert, und das mobile Endgerät 110 wird für die Nutzung mit der Teilnehmerkarte 100 freigeschaltet.

Fig. 2 zeigt eine schematische Veranschaulichung eines Verfahrens a) zum gegenseitigen Zuordnen eines mobilen Endgeräts 210 und einer Teilnehmerkarte 200 und b) zum Überprüfen der Zulässigkeit der Nutzung eines mobilen Endgeräts 210 mit einer Teilnehmerkarte 200, gemäß einer Ausführungsform der Erfindung. Anlässlich einer erstmaligen Inbetriebnahme des mobilen Endgeräts 210 mit der Teilnehmerkarte 200 (Fig. 2a) wird in der Teilnehmerkarte 200 mit einem Kommando OTP START ein Einmalpasswortgenerator erzeugt. Zudem sendet die Teilnehmerkarte 200 an das mobile Endgerät 210 einen Schlüssel K und ein Kommando OTP SYNC, um den Einmalpasswortgenerator mit dem mobilen Endgerät 210 zu synchronisieren und bedarfsweise zuvor in dem mobilen Endgerät 210 ebenfalls einen Einmalpasswortgenerator einzurichten. Daraufhin sendet das mobile Endgerät 210 eine Anweisung SIM LOCK zum Einrichten einer Zuordnung zwischen dem mobilen Endgerät 210 und der Teilnehmerkarte 200 an die Teilnehmerkarte 200. Bei jeder nachfolgenden Inbetriebnahme des mobilen Endgeräts 210 mit einer Teilnehmerkarte 200 (Fig. 2b) muss sich die Teilnehmerkarte 200 gegenüber dem mobilen Endgerät 210 authentisieren. Für die Authentisierung sendet die Teilnehmerkarte 200 ein mit dem Einmalpasswortgenerator erzeugtes Einmalpasswort an das mobile Endgerät 210. Das mobile Endgerät 210 überprüft das Einmalpasswort auf Gültigkeit, stellt im Fall von Fig. 2b die Gültigkeit mit einer Nachricht SIM OK fest und schaltet sich nur Nutzung mit der Teilnehmerkarte 200 frei.

## Patentansprüche

1. Verfahren zum gegenseitigen Zuordnen eines mobilen Endgeräts (210) und einer Teilnehmerkarte (200) zum Betrieb des mobilen Endgeräts (210), wobei das mobile Endgerät (210) und die Teilnehmerkarte (200) derart einander zugeordnet werden, dass das Endgerät (210) - zumindest teilweise - mit keiner anderen Teilnehmerkarte als der Teilnehmerkarte (200) gemäß der Zuordnung nutzbar ist, **dadurch gekennzeichnet, dass** anlässlich des Zuordnens zwischen dem mobilen Endgerät (210) und der Teilnehmerkarte (200):
in der Teilnehmerkarte (200) ein Einmalpasswortgenerator gestartet und mit dem Endgerät synchronisiert wird, der anlässlich einer nachfolgenden Inbetriebnahme des mobilen Endgeräts (210) mit der Teilnehmerkarte (210) ein Einmalpasswort erzeugt und an das mobile Endgerät (210) sendet, um die Zulässigkeit der Nutzung des mobilen Endgeräts (210) mit der Teilnehmerkarte (200) zu überprüfen.

2. Verfahren nach Anspruch 1, wobei als Einmalpasswortgenerator ein zeitgesteuerter Einmalpasswortgenerator vorgesehen ist.

3. Verfahren nach Anspruch 1, wobei als Einmalpasswortgenerator ein eventgesteuerter Einmalpasswortgenerator vorgesehen ist.

4. Verfahren nach einem der Ansprüche 1 bis 3, wobei der Einmalpasswortgenerator anlässlich seiner Erzeugung mit dem mobilen Endgerät (210) synchronisiert wird.

5. Verfahren nach einem der Ansprüche 1 bis 4, wobei anlässlich des Zuordnens zwischen dem mobilen Endgerät (210) und der Teilnehmerkarte (200) weiter:
- mit einer in der Teilnehmerkarte (200) eingerichteten Schlüssel-Erzeugungs-Einrichtung ein Schlüssel erzeugt wird und an das mobile Endgerät (210) gesendet wird,
- das mobile Endgerät (210) in Reaktion auf den Schlüssel die Zuordnung zwischen dem mobilen Endgerät (210) und der Teilnehmerkarte (200) vornimmt.

6. Verfahren nach Anspruch 5, wobei der von der Teilnehmerkarte (200) gelieferte Schlüssel durch das mobile Endgerät (210) auf Zulässigkeit geprüft wird, das mobile Endgerät (210) die Zuordnung zwischen dem mobilen Endgerät (210) und der Teilnehmerkarte (200) in Reaktion auf den Schlüssel nur dann vornimmt, falls der Schlüssel zulässig ist.

7. Verfahren nach einem der Ansprüche 1 bis 6, wobei das Zuordnen zwischen dem mobilen Endgerät (210) und der Teilnehmerkarte (200) anlässlich einer erstmaligen Inbetriebnahme des mobilen Endgeräts (210) mit der Teilnehmerkarte (200) durchgeführt wird.

8. Verfahren zum Überprüfen der Zulässigkeit der Nutzung eines mobilen Endgeräts (210) mit einer Teilnehmerkarte (200), wobei das mobile Endgerät (210) und die Teilnehmerkarte (200) mit einem Verfahren gemäß einem der Ansprüche 1 bis 7 gegenseitig zugeordnet werden oder worden sind, wobei, zum Überprüfen der Zulässigkeit der Nutzung des mobilen Endgeräts (210) mit der Teilnehmerkarte (200), anlässlich einer Inbetriebnahme des mobilen Endgeräts (210) mit der Teilnehmerkarte (200):
- mit dem Einmalpasswortgenerator der Teilnehmerkarte (200) ein Einmalpasswort erzeugt wird und an das mobile Endgerät (210) gesendet wird,
- beim mobilen Endgerät (210) das Einmalpasswort auf Gültigkeit überprüft wird und
- im Fall, dass das Einmalpasswort gemäß der Überprüfung beim mobilen Endgerät (210) gültig ist, die Nutzung des mobilen Endgeräts (210) mit der Teilnehmerkarte (200) als zulässig eingestuft wird.

9. Verfahren nach Anspruch 8, wobei im Fall, dass die Nutzung des mobilen Endgeräts (210) mit der Teilnehmerkarte (200) als zulässig eingestuft wird, das mobile Endgerät (210) für die Nutzung mit der Teilnehmerkarte (200) freigeschaltet wird.

## Claims

1. A method for mutually associating a mobile end device (210) and a subscriber card (200) for operating the mobile end device (210), wherein the mobile end device (210) and the subscriber card (200) are associated with each other such that the end device (210) is usable according to the association - at least partly - with no other subscriber card than the subscriber card (200), **characterized in that**
on the occasion of the association between the mobile end device (210) and the subscriber card (200):
in the subscriber card (200) a one-time password generator is started and synchronized with the end device, which one-time password generator on the occasion of a subsequent initial operation of the mobile end device (210) with the subscriber card (200) generates a one-time password and sends it to the mobile end device (210) to check the permissibility of the use of the mobile end device (210) with the subscriber card (200).

2. The method according to claim 1, wherein as a one-time password generator a time-controlled one-time password generator is provided.

3. The method according to claim 1, wherein as a one-time password generator an event-controlled one-time password generator is provided.

4. The method according to any of claims 1 to 3, wherein the one-time password generator on the occasion of its generation is synchronized with the mobile end device (210).

5. The method according to any of claims 1 to 4, wherein on the occasion of the associating between the mobile end device (210) and the subscriber card (200), further:
- a key is generated with a key generation device arranged in the subscriber card (200) and sent to the mobile end device (210),
- in reaction to the key the mobile end device (210) performs the association between the mobile end device (210) and the subscriber card (200).

6. The method according to claim 5, wherein the key delivered by the subscriber card (200) is checked for admissibility by the mobile end device (210), the mobile end device (210) performs the association between the mobile end device (210) and the subscriber card (200) in reaction to the key only when the key is permissible.

7. The method according to any of claims 1 to 6, wherein the associating between the mobile end device (210) and the subscriber card (200) is carried out on the occasion of a first-time initial operation of the mobile end device (210) with the subscriber card (200).

8. A method for checking the permissibility of the use of a mobile end device (210) with a subscriber card (200), wherein the mobile end device (210) and the subscriber card (200) are or have been mutually associated with a method according to any of claims 1 to 7, wherein for checking the permissibility of the use of the mobile end device (210) with the subscriber card (200), on the occasion of an initial operation of the mobile end device (210) with the subscriber card (200):
- a one-time password is generated with the one-time password generator of the subscriber card (200) and sent to the mobile end device (210),
- at the mobile end device (210) the one-time password is checked for validity and
- in the case that the one-time password is valid according to the check at the mobile end device (210), the use of the mobile end device (210) with the subscriber card (200) is classified as permissible.

9. The method according to claim 8, wherein in case the use of the mobile end device (210) with the subscriber card (200) is classified as permissible the mobile end device (210) is released for the use with the subscriber card (200).

## Revendications

1. Procédé d'affectation réciproque d'un terminal mobile (210) et d'une carte d'abonné (200) pour le fonctionnement du terminal mobile (210), le terminal mobile (210) et la carte d'abonné (200) étant affectés de telle façon l'un à l'autre que le terminal mobile (210), au moins temporairement, n'est utilisable avec aucune autre carte d'abonné que la carte d'abonné (200) conforme à l'affectation, **caractérisé en ce que**
à l'occasion de l'affectation entre le terminal mobile (210) et la carte d'abonné (200) :
dans la carte d'abonné (200), un générateur de mot de passe à usage unique est démarré et synchronisé avec le terminal mobile, lequel, à l'occasion d'une mise en service subséquente du terminal mobile (210) avec la carte d'abonné (200), génère un mot de passe à usage unique et l'envoie au terminal mobile (210) afin de vérifier l'admissibilité de l'utilisation du terminal mobile (210) avec la carte d'abonné (200).

2. Procédé selon la revendication 1, cependant que, en tant que générateur de mot de passe à usage unique, c'est un générateur de mot de passe à usage unique à commande temporelle qui est prévu.

3. Procédé selon la revendication 1, cependant que, en tant que générateur de mot de passe à usage unique, c'est un générateur de mot de passe à usage unique à commande événementielle qui est prévu.

4. Procédé selon une des revendications de 1 à 3, cependant que le générateur de mot de passe à usage unique est, à l'occasion de sa création, synchronisé avec le terminal mobile (210).

5. Procédé selon une des revendications de 1 à 4, cependant que, à l'occasion de l'affectation entre le terminal mobile (210) et la carte d'abonné (200), en outre :
- avec un dispositif de création de clé installé dans la carte d'abonné (200), une clé est créée et est envoyée au terminal mobile (210),
- le terminal mobile (210), en réaction à la clé, procède à l'affectation entre le terminal mobile (210) et la carte d'abonné (200).

6. Procédé selon la revendication 5, cependant que la clé fournie par la carte d'abonné (200) est vérifiée par le terminal mobile (210) quant à son admissibilité, le terminal mobile (210) ne procédant à l'affectation entre le terminal mobile (210) et la carte d'abonné (200) en réaction la clé que si la clé est admissible.

7. Procédé selon une des revendications de 1 à 6, cependant que l'affectation entre le terminal mobile (210) et la carte d'abonné (200) à l'occasion d'une première mise en service du terminal mobile (210) est effectuée avec la carte d'abonné (200).

8. Procédé de vérification de l'admissibilité de l'utilisation d'un terminal mobile (210) avec une carte d'abonné (200), cependant que le terminal mobile (210) et la carte d'abonné (200) sont ou ont été affectés réciproquement avec un procédé selon une des revendications de 1 à 7, cependant que, pour la vérification de l'admissibilité de l'utilisation du terminal mobile (210) avec la carte d'abonné (200), à l'occasion d'une mise en service du terminal mobile (210) avec la carte d'abonné (200) :
- avec le générateur de mot de passe à usage unique de la carte d'abonné (200), un mot de passe à usage unique est généré et est envoyé au terminal mobile (210),
- au terminal mobile (210), le mot de passe à usage unique est vérifié quant à sa validité et
- dans le cas où le mot de passe à usage unique est valide, conformément à la vérification au terminal mobile (210), l'utilisation du terminal mobile (210) avec la carte d'abonné (200) est classifiée comme admissible.

9. Procédé selon la revendication 8, cependant que, dans le cas où l'utilisation du terminal mobile (210) avec la carte d'abonné (200) est classifiée comme admissible, le terminal mobile (210) est activé pour l'utilisation avec la carte d'abonné (200).
